# EUROPEAN PATENT APPLICATION

(11) **EP 2 947 952 A1**
(43) Date of publication of application: **25.11.2015**
(21) Application number: 13871338.3
(22) Date of filing: 17.01.2013
(51) Int. Cl.: H04W 76/02

(54) **INFORMATION REPORT METHOD FOR DEVICE-TO-DEVICE COMMUNICATION, USER EQUIPMENT, AND BASE STATION**

(71) Applicant: Fujitsu Limited, Kawasaki-shi, Kanagawa 211-8588 (JP)
(72) Inventor: WU, Lianhai, Beijing 100025 (CN); QIU, Tao, Beijing 100025 (CN); CHANG, Ningjuan, Beijing 100025 (CN); XU, Haibo, Beijing 100025 (CN); LU, Yanling, Beijing 100025 (CN); WANG, Weiwei, Beijing 100025 (CN)
(74) Representative: Ward, James Norman
(86) International application number: PCT/CN2013/070616
(87) International publication number: WO 2014/110763

(57) **Abstract**

Embodiments of the present disclosure provide an information reporting method for device to device communication, user equipment and base station. The method includes: transmitting, by UE, indication information indicating to perform D2D-only communication, so that a base station learns that a data traffic of the UE is a D2D-only communication traffic. With the embodiments of the present disclosure, the base station may learn D2D-only information of the UE, so as to suitably configure the UE, thereby avoiding unnecessary handover or mode selection.

## Description

### Technical Field

The present disclosure relates to the field of communications, and in particular to an information reporting method for device to device communication, user equipment and base station.

### Background

Device to device (D2D) communication refers to direct communication between user equipments (UEs), which may effectively improve spectral efficiency of a wireless system and lower control signaling overhead.

UE1 and UE2 will report, through a discovery mechanism, potential UE possibly performing D2D communication with themselves. According to a report result, when a network side learns that a channel condition between UE1 and UE2 is suitable for employing D2D communication, a base station may configure UE1 and UE2 to perform direct data transmission, without performing transmission via a core network. And control signaling supporting D2D communication is still transmitted by an eNB.

As D2D traffic is not transmitted via the core network, it cannot be tolled together with a cellular link, and it is possible that the cost of the D2D traffic is lower. Furthermore, taking into account that UE that can use a D2D link for transmission is relatively close to each other, the link is more stable and is suitable for transmitting a traffic of a large throughput. Thus, it is possible that some D2D traffics initiated by the UE desire to use a D2D link only, and do not desire to use a cellular link through mode selection, and such traffics may be referred to as D2D-only traffics.

For UE having a D2D-only traffic, if the UE has only the D2D-only traffic, even though the D2D link is not suitable for data transmission any longer, a cellular link is not approved to be used for continued transmission. Therefore, the network side is not necessary to configure the UE with related mode selection and handover parameter(s), and does not need to start mode selection and handover procedure.

If the UE has both a D2D-only traffic and a non-D2D-only traffic, the UE needs to differentiate these traffics. And when the link used by the D2D-only traffic is not suitable for data transmission any longer, a mode selection procedure needs not to be started.

However, it was found by the inventors that in any existing solution, only the UE learns whether a data traffic is a D2D-only traffic or not, and the network side does not learn whether the data traffic of the UE is a D2D-only traffic or not. Hence, the network side cannot suitably configure the UE according to a type of the data traffic, resulting in unnecessary handover or mode selection.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

Embodiments of the present disclosure provide an information reporting method for device to device communication, user equipment and base station, with an object being that the UE reports D2D-only indication information, so that the base station learns the D2D-only information of the UE.

According to an aspect of the embodiments of the present disclosure, there is provided an information reporting method for device to device communication, including:
transmitting, by UE, indication information indicating to perform D2D-only communication, so that a base station learns that a data traffic of the UE is a D2D-only communication traffic.

According to another aspect of the embodiments of the present disclosure, there is provided an information reporting method for D2D communication, including:
receiving, by a base station, indication information indicating UE to perform D2D-only communication; and
configuring the UE by the base station, so that a data traffic of the UE is a D2D-only communication traffic.

According to a further aspect of the embodiments of the present disclosure, there is provided an information reporting method for D2D communication, including:
receiving, by a mobility management entity, non-access stratum information carrying indication information transparently transmitted by a base station, the indication information indicating UE to perform D2D-only communication;
encapsulating the indication information in a feedback message; and
transmitting the feedback message to the base station, so that the base station learns that a data traffic of the UE is a D2D-only communication traffic according to the indication information.

According to still another aspect of the embodiments of the present disclosure, there is provided UE, including:
a first transmitting unit, configured to transmit indication information indicating to perform D2D-only communication, so that a base station learns that a data traffic of the UE is a D2D-only communication traffic.

According to still another aspect of the embodiments of the present disclosure, there is provided a base station, including:
a first receiving unit, configured to receive indication information indicating UE to perform D2D-only communication; and
a configuring unit, configured to configure the UE, so that a data traffic of the UE is a D2D-only communication traffic.

According to still another aspect of the embodiments of the present disclosure, there is provided a mobility management entity, including:
a fourth receiving unit, configured to receive a non-access stratum information element carrying indication information transparently transmitted by a base station, the indication information indicating UE to perform D2D-only communication;
an encapsulating unit, configured to encapsulate the indication information in a feedback message; and
a fourth transmitting unit, configured to transmit the feedback message to the base station, so that the base station learns that a data traffic of the UE is a D2D-only communication traffic according to the indication information.

According to still another aspect of the embodiments of the present disclosure, there is provided a communication system, including the UE and the base station as described above, or including the UE, the base station and the mobility management entity as described above.

According to still another aspect of the embodiments of the present disclosure, there is provided a computer-readable program, wherein when the program is executed in UE, the program enables a computer to carry out the information reporting method for D2D communication as described above in the UE.

According to still another aspect of the embodiments of the present disclosure, there is provided a storage medium in which a computer-readable program is stored, wherein the computer-readable program enables a computer to carry out the information reporting method for D2D communication as described above in UE.

According to still another aspect of the embodiments of the present disclosure, there is provided a computer-readable program, wherein when the program is executed in a base station, the program enables a computer to carry out the information reporting method for D2D communication as described above in the base station.

According to still another aspect of the embodiments of the present disclosure, there is provided a storage medium in which a computer-readable program is stored, wherein the computer-readable program enables a computer to carry out the information reporting method for D2D communication as described above in a base station.

An advantage of the embodiments of the present disclosure exists in that by reporting indication information indicating D2D-only by the UE, the base station may learn the D2D-only information of the UE, and the network side may suitably configure the UE, thereby avoiding unnecessary handover or mode selection.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessary to scale, emphasis instead being placed upon clearly illustrating the principles of the present disclosure. To facilitate illustrating and describing some parts of the disclosure, corresponding portions of the drawings may be exaggerated or reduced in size.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
Figure 1 is a schematic diagram of D2D communication in a direct mode;
Figure 2 is a schematic diagram of D2D communication in a locally routed manner;
Figure 3 is a flowchart of the information reporting method of Embodiment 1 of the present disclosure;
Figure 4 is a flowchart of the information reporting method of Embodiment 2 of the present disclosure;
Figure 5 is a flowchart of the information reporting method of Embodiment 3 of the present disclosure;
Figure 6 is another flowchart of the information reporting method of Embodiment 3 of the present disclosure;
Figure 7 is a flowchart of the information reporting method of Embodiment 4 of the present disclosure;
Figure 8 is another flowchart of the information reporting method of Embodiment 4 of the present disclosure;
Figure 9 is a flowchart of the information reporting method of Embodiment 5 of the present disclosure;
Figure 10 is another flowchart of the information reporting method of Embodiment 5 of the present disclosure;
Figure 11 is still another flowchart of the information reporting method of Embodiment 5 of the present disclosure;
Figure 12 is a flowchart of the information reporting method of Embodiment 6 of the present disclosure;
Figure 13 is another flowchart of the information reporting method of Embodiment 6 of the present disclosure;
Figure 14 is still another flowchart of the information reporting method of Embodiment 6 of the present disclosure;
Figure 15 is a flowchart of the information reporting method of Embodiment 7 of the present disclosure;
Figure 16 is a schematic diagram of the structure of the UE of Embodiment 8 of the present disclosure;
Figure 17 is another schematic diagram of the structure of the UE of Embodiment 8 of the present disclosure;
Figure 18 is a further schematic diagram of the structure of the UE of Embodiment 8 of the present disclosure;
Figure 19 is still another schematic diagram of the structure of the UE of Embodiment 8 of the present disclosure;
Figure 20 is yet still another schematic diagram of the structure of the UE of Embodiment 8 of the present disclosure;
Figure 21 is a schematic diagram of the structure of the base station of Embodiment 9 of the present disclosure;
Figure 22 is another schematic diagram of the structure of the base station of Embodiment 9 of the present disclosure;
Figure 23 is a further schematic diagram of the structure of the base station of Embodiment 9 of the present disclosure; and
Figure 24 is a schematic diagram of the structure of the mobility management entity of Embodiment 10 of the present disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

There may exist two manners for D2D communication between UE: a direct mode or a locally routed manner. Wherein, a cellular link described herein refers to a communication manner where user plane data need to be transmitted via a core network.

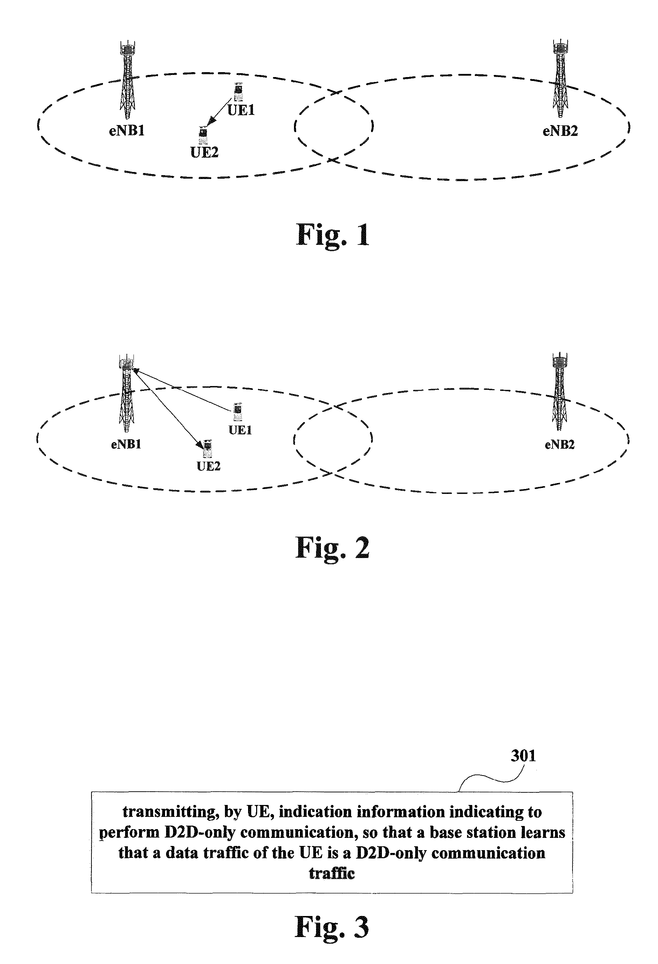

Fig. 1 is a schematic diagram of D2D communication in a direct mode. As shown in Fig. 1, UE1 and UE2 may perform direct data transmission, with no need of participation of a base station and a core network. Fig. 2 is a schematic diagram of D2D communication in a locally routed manner. As shown in Fig. 2, data transmitted between UE1 and UE2 may be routed via a base station, with no need of participation of a core network.

The embodiments of the present disclosure shall be described taking scenarios shown in Figs. 1 and 2 as examples. For the sake of simplicity, the direct mode and the locally routed manner are not differentiated in the embodiments of the present disclosure. A particular scenario or communication manner may be determined according to an actual situation.

### Embodiment 1

An embodiment of the present disclosure provides an information reporting method for D2D communication. Fig. 3 is a flowchart of the information reporting method of the embodiment of the present disclosure. As shown in Fig. 3, the method includes:
step 301: transmitting, by UE, indication information indicating to perform D2D-only communication, so that a base station learns that a data traffic of the UE is a D2D-only communication traffic.

In this embodiment, the indication information may be 1 bit. For example, "0" indicates that the UE performs a non-D2D-only traffic, and "1" indicates that the UE performs a D2D-only traffic. The indication information may further contain identification information of the data traffic of the UE and information indicating whether corresponding data is a D2D-only traffic. For example, it indicates that a data traffic 1 is a D2D-only traffic, and a data traffic 2 is a non-D2D-only traffic, etc.

It should be noted that only the indication information indicating a D2D-only traffic is illustrated above. However, the present disclosure is not limited thereto, and a particular implementation may be determined according to an actual situation.

In this embodiment, after the UE transmits the indication information, the base station may learn whether a data traffic being applied by the UE for transmission is a D2D-only traffic. Hence, the base station may suitably configure the UE. For example, when learning that the UE has a D2D-only traffic, the base station need not to perform mode selection for the D2D link to select a cellular link, thereby reducing unnecessary performance overhead.

In this embodiment, the base station may obtain the indication information directly from the message transmitted by the UE, and may also receive the message from other devices, such as a mobility management entity (MME), so as to indirectly obtain the indication information.

Furthermore, the base station may obtain the indication information in a process of setting up a traffic when the UE has no radio resource control (RRC) connection, and may also obtain the indication information in a process of initiating transmission of a traffic when the UE has set up RRC connection.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 2

On the basis of Embodiment 1, an embodiment of the present disclosure further describes the information reporting method for D2D communication in detail. In this embodiment, the UE may report the indication information when setting up RRC connection.

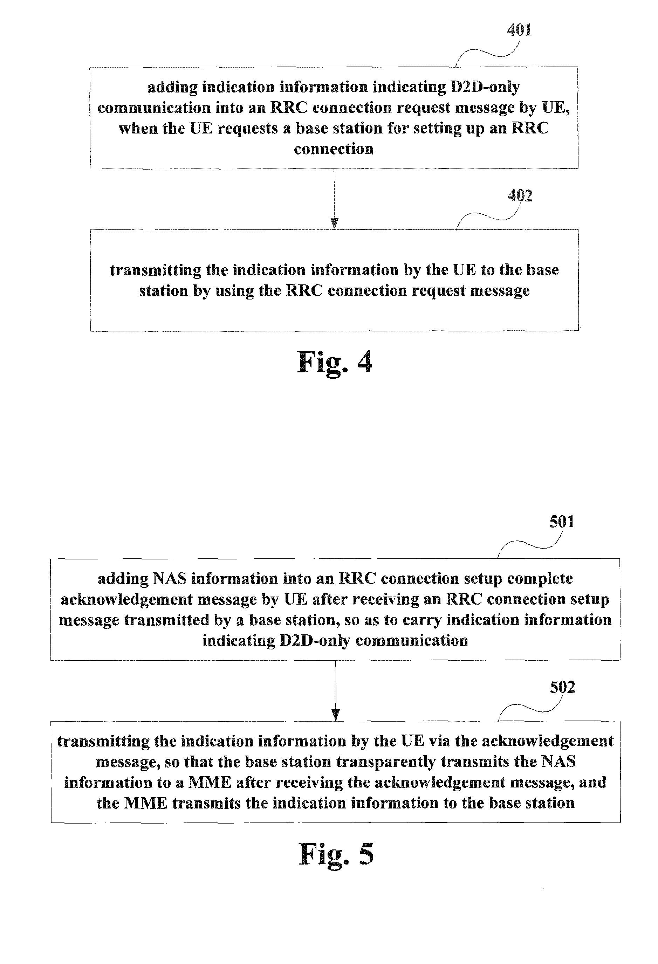

Fig. 4 is a flowchart of the information reporting method of the embodiment of the present disclosure. As shown in Fig. 4, the method includes:
step 401: adding indication information indicating D2D-only communication into an RRC connection request message by UE, when the UE requests a base station for setting up an RRC connection; and
step 402: transmitting the indication information by the UE to the base station by using the RRC connection request message.

For example, UE1 may report the information to a network side after discovering through signal detection that UE2 can perform D2D communication with it. And when UE1 needs to transmit a D2D-only traffic to UE2, it may request the base station for setting up an RRC connection.

In particular, UE1 may add a new information element (IE), such as an assumed D2D-only indicator, into an *RRCConnectionRequest* message, informing the base station that the data traffic needing to be transmitted is a D2D-only traffic.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 3

On the basis of Embodiment 1, an embodiment of the present disclosure further describes the information reporting method for D2D communication in detail. In this embodiment, the UE may report the indication information after successfully setting up RRC connection.

Fig. 5 is a flowchart of the information reporting method of the embodiment of the present disclosure. As shown in Fig. 5, the method includes:
step 501: adding non-access stratum information into an RRC connection setup complete acknowledgement message by UE after receiving an RRC connection setup message transmitted by a base station, so as to carry indication information indicating D2D-only communication;
step 502: transmitting the indication information by the UE via the acknowledgement message, so that the base station transparently transmits the non-access stratum information to a mobility management entity after receiving the acknowledgement message, and the mobility management entity transmits the indication information to the base station.

In particular, UE1 receives *RRCConnecitonSetup* from the base station, may configure related parameter(s), and may add a new IE in an *RRCConnecitonSetup Complete* message or enhance an original IE. For example, a DedicatedInfoNAS IE may be enhanced, and UE1 may inform a network side by adding the non-access stratum (NAS) information into the DedicatedInfoNAS IE that the data needing to be transmitted is a D2D-only traffic.

The UE may transmit the *RRCConnecitonSetupComplete* message to the base station, so as to acknowledge to the base station that the RRC connection setup succeeds. After receiving the *RRCConnecitonSetupComplete* message, the base station may transparently transmit the NAS information (such as the DedicatedInfoNAS IE) to the MME, and the MME transmits the indication information to the base station after parsing the NAS information.

In particular, if the MME learns according to the NAS information transparently transmitted by the base station that the data to be transmitted by UE1 is a D2D-only traffic, the MME may generate a new IE (such as an D2D-only indicator IE), and encapsulate it in an S1AP message (such as an INITIAL CONTEXT SETUP REQUEST) to transmit to the base station.

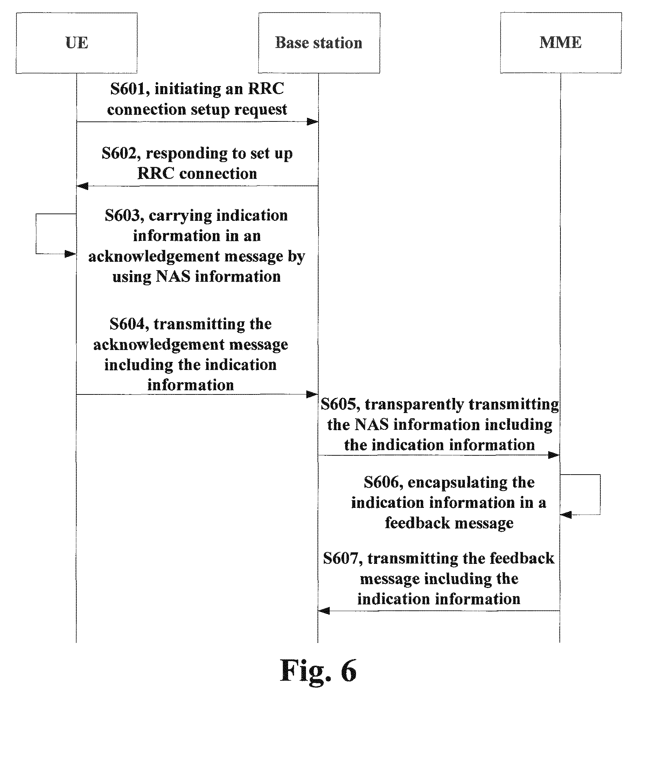

Fig. 6 is another flowchart of the information reporting method of the embodiment of the present disclosure, which is described from setting up RRC connection by UE. As shown in Fig. 6, the method includes:
step 601: transmitting an RRC connection setup request by the UE to a base station;
in this implementation, UE1 may report the information to a network side after discovering through signal detection that UE2 can perform D2D communication with it. And when UE1 needs to transmit a D2D-only traffic to UE2, it may transmit an *RRCConnectionRequest* message to the base station to request for setting up RRC connection;
step 602: responding to set up RRC connection by the base station;
in this implementation, after receiving the *RRCConnectionRequest* from UE1, the base station may judge according to a payload and a channel state whether to approve UE1 to set up RRC connection; if it approves, the base station may transmit an *RRCConnectionSetup* to the UE1, approving to set up RRC connection, and perform RRC connection configuration on UE1;
step 603: carrying the indication information by the UE in an RRC connection setup complete acknowledgement message by using NAS information, after receiving an RRC connection setup message transmitted by the base station;
in this implementation, UE1 configures related parameters once it receives the *RRCConnectionSetup* from the base station, and may add a new IE in an *RRCConnecitonSetupComplete* message or enhance an original IE; for example, a DedicatedInfoNAS IE may be enhanced; and UE1 may inform a network side by adding NAS information into the DedicatedInfoNAS IE that the data needing to be transmitted is a D2D-only traffic;
step 604: transmitting the indication information via the acknowledgement message;
in this implementation, after successfully configuring the related parameters, UE1 may transmit an enhanced *RRCConnecitonSetupComplete* message to the base station, so as to acknowledge to the base station that the RRC connection setup succeeds;
step 605: transparently transmitting the NAS information to an MME by the base station after receiving the acknowledgement message;
step 606: encapsulating the indication information in a feedback message by the MME after receiving the NAS information containing the indication information transparently transmitted by the base station;
in this implementation, after receiving the information transmitted by the base station, the MME may perform security detection on the UE, and set up corresponding DRB;
in this implementation, if the MME learns according to the NAS information transparently transmitted by the base station that the data to be transmitted by UE1 is a D2D-only traffic, the MME may generate a new IE (such as an D2D-only indicator IE), and encapsulate it in an S1AP message (such as an INITIAL CONTEXT SETUP REQUEST);
step 607: transmitting the feedback message containing the indication information by the MME to the base station, so that the base station learns according to the indication information that the data traffic of the UE is a D2D-only traffic.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 4

On the basis of Embodiment 1, an embodiment of the present disclosure further describes the information reporting method for D2D communication in detail. In this embodiment, the UE may report the indication information in performing RRC connection reconfiguration.

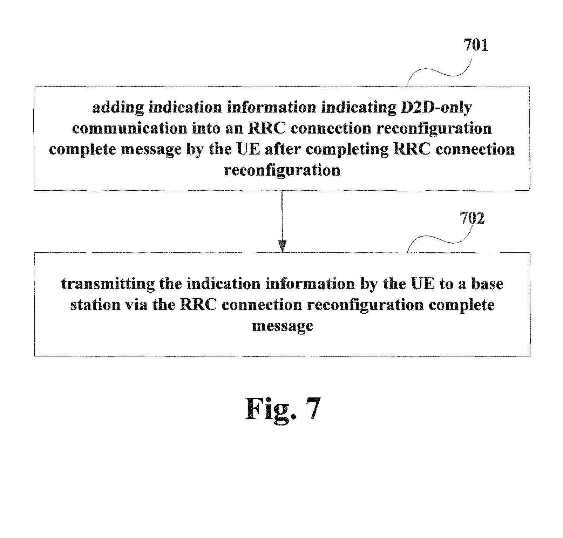

Fig. 7 is a flowchart of the information reporting method of the embodiment of the present disclosure. As shown in Fig. 7, the method includes:
step 701: adding indication information indicating D2D-only communication into an RRC connection reconfiguration complete message by the UE after completing RRC connection reconfiguration; and
step 702: transmitting the indication information by the UE to a base station via the RRC connection reconfiguration complete message.

In particular, after completing RRC connection reconfiguration according to a *RRCConnectionReconfiguration* parameter, UE1 may add a new IE in an *RRC-ConnectionReconfigurationComplete* message, informing a network side that the data needing to be transmitted is a D2D-only traffic. And then UE1 may transmit an enhanced *RRCConnectionReconfigurationComplete* message to the base station.

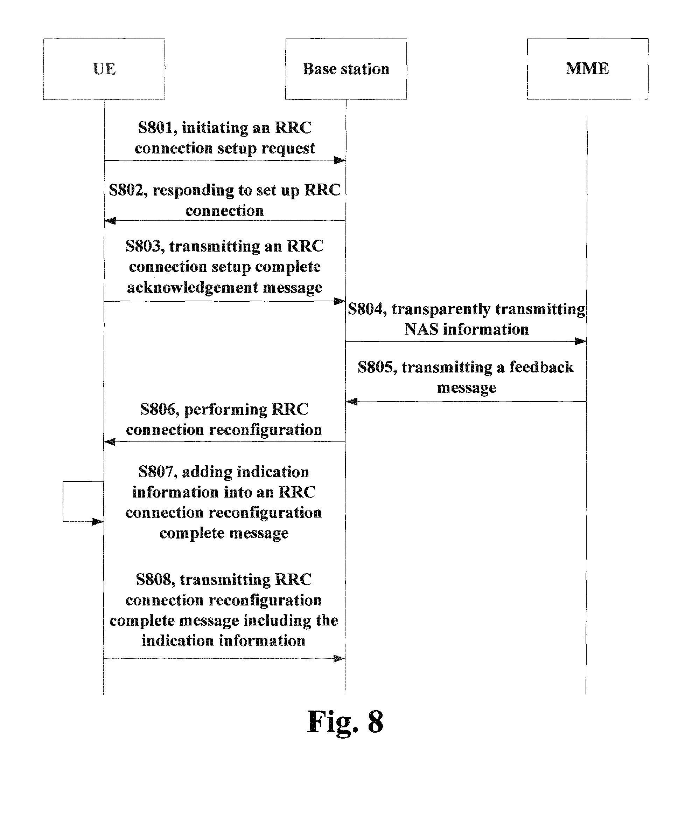

Fig. 8 is another flowchart of the information reporting method of the embodiment of the present disclosure, which is described starting from setting up RRC connection by UE. As shown in Fig. 8, the method includes:
step 801: transmitting an RRC connection setup request by the UE to a base station;
step 802: responding to set up RRC connection by the base station;
step 803: transmitting an RRC connection setup complete acknowledgement message by the UE to the base station;
step 804: transparently transmitting NAS information to an MME by the base station after receiving the acknowledgement message;
step 805: transmitting a feedback message by the MME to the base station after receiving the NAS information transparently transmitted by the base station;
step 806: performing RRC connection reconfiguration by the base station on the UE;
in this embodiment, after receiving an INITIAL CONTEXT SETUP REQUEST from the MME, the base station may perform RRC connection reconfiguration on UE1, that is, it may transmit an *RRCConnectionReconfiguration* message;
step 807: adding indication information indicating D2D-only communication into an RRC connection reconfiguration complete message by the UE in completing the RRC connection reconfiguration;
in this implementation, after completing RRC connection reconfiguration according to a *RRCConnectionReconfiguration* parameter, UE1 may add a new IE in an *RRCConnectionReconfigurationComplete* message, informing a network side that the data needing to be transmitted is a D2D-only traffic;
step 808: transmitting the indication information by the UE to the base station via the RRC connection reconfiguration complete message;
in this implementation, UE1 may transmit reconfiguration complete signaling to the base station, that is, it may transmit an enhanced *RRCConnectionReconfiguration-Complete* message to the base station, so that the base station learns that the data traffic of the UE is a D2D-only communication traffic.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 5

On the basis of Embodiment 1, an embodiment of the present disclosure further describes the information reporting method for D2D communication in detail. In this embodiment, the UE may report the indication information after performing RRC connection reconfiguration.

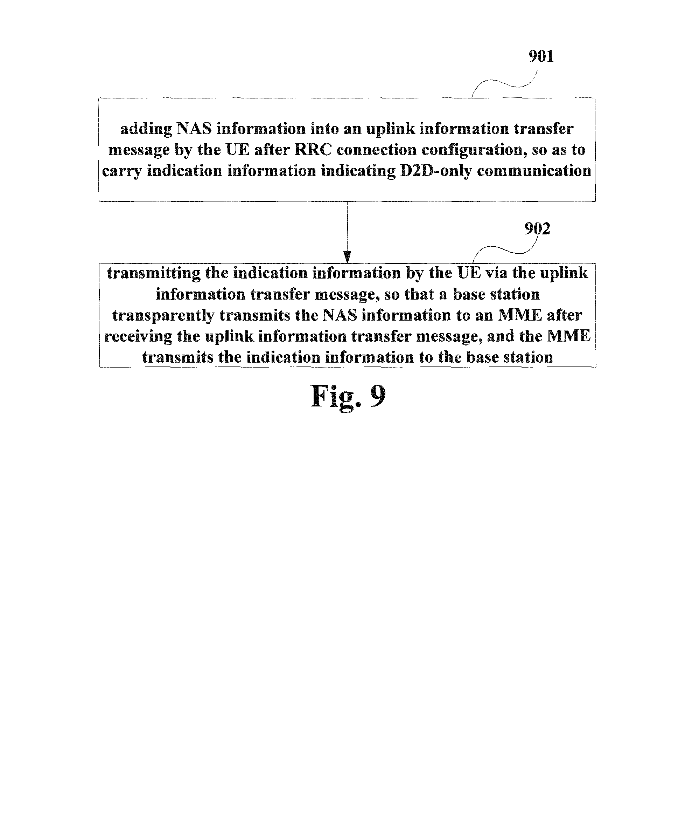

Fig. 9 is a flowchart of the information reporting method of the embodiment of the present disclosure. As shown in Fig. 9, the method includes:
step 901: adding NAS information into an uplink information transfer message by the UE after completing the RRC connection reconfiguration, so as to carry indication information indicating D2D-only communication; and
step 902: transmitting the indication information by the UE via the uplink information transfer message, so that a base station transparently transmits the NAS information to an MME after receiving the uplink information transfer message, and the MME transmits the indication information to the base station.

In particular, UE1 may add a new IE into the uplink information transfer message or enhance an original IE (for example, a DedicatedInfoNAS IE may be enhanced) after completing the RRC connection reconfiguration, so as to inform a network side that the data needing to be transmitted is a D2D-only traffic.

UE1 may transmit an enhanced uplink information transfer message to the base station, and the base station may transparently transmit the NAS information to the MME after receiving the uplink information transfer message, so that the MME transmits the indication information to the base station after parsing the NAS information.

In particular, after learning that the data to be transmitted by UE1 is a D2D-only traffic according to the NAS information transparently transmitted by the base station, the MME may generate a new IE (such as a D2D-only indicator IE), and encapsulate it in an S1AP message (such as an E-RAB SETUP REQUEST), and then transmit the enhanced message to the base station.

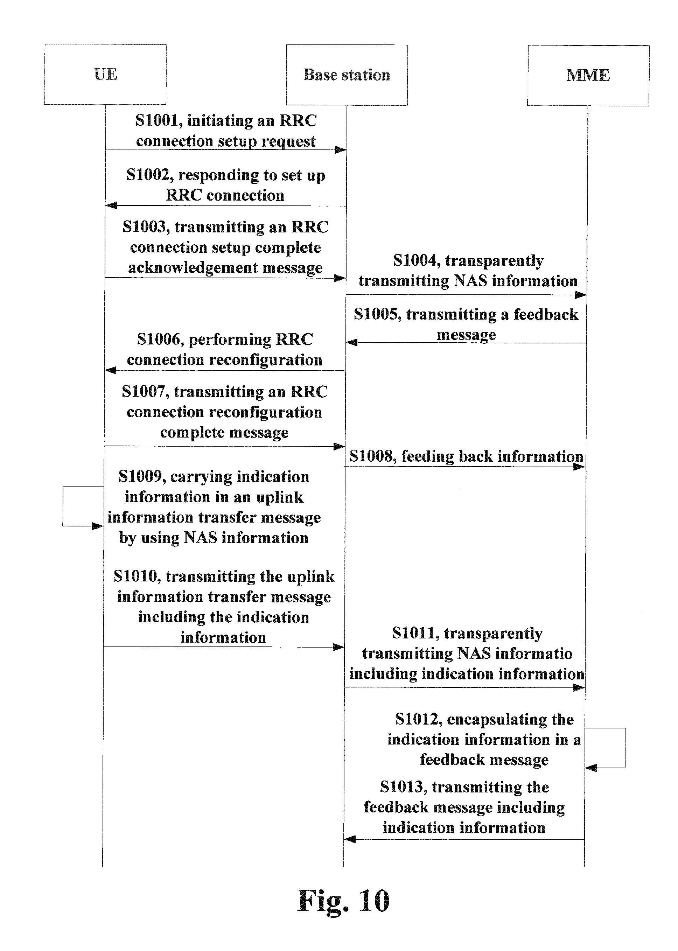

In an implementation, the UE has not set up the RRC connection. Fig. 10 is another flowchart of the information reporting method of the embodiment of the present disclosure, which is described from setting up RRC connection by UE. As shown in Fig. 10, the method includes:
step 1001: transmitting an RRC connection setup request by the UE to a base station;
step 1002: responding to set up RRC connection by the base station;
step 1003: transmitting an RRC connection setup complete acknowledgement message by the UE to the base station;
step 1004: transparently transmitting NAS information to a mobility management entity by the base station after receiving the acknowledgement message;
step 1005: receiving by the mobility management entity the NAS information transparently transmitted by the base station, and transmitting a feedback message to the base station;
step 1006: performing RRC connection reconfiguration by the base station on the UE;
step 1007: transmitting an RRC connection reconfiguration complete message by the UE to the base station on completing the RRC connection reconfiguration;
step 1008: feeding back information by the base station to the MME;
in this implementation, the base station may feed back an INITIAL CONTEXT SETUP RESPONSE message to the MME after receiving the *RRCConnectionReconfigurationComplete* message from UE1;
step 1009: adding NAS information into an uplink information transfer message by the UE after completing the RRC connection reconfiguration, so as to carry the indication information indicting D2D-only communication;
in this implementation, UE1 may add a new IE into the uplink information transfer message or enhance an original IE (for example, a DedicatedInfoNAS IE may be enhanced) after completing the RRC connection reconfiguration; and UE1 informs the network side via the NAS information added into the DedicatedInfoNAS IE that the data needing to be transmitted is a D2D-only traffic;
step 1010: transmitting the indication information by the UE via the uplink information transfer message;
in this implementation, UE1 may transmit the enhanced uplink information transfer message to the base station;
step 1011: transparently transmitting the NAS information to the mobility management entity by the base station after receiving the uplink information transfer message;
step 1012: encapsulating the indication information in a feedback message by the mobility management entity after receiving the NAS information carrying the indication information transparently transmitted by the base station;
in this implementation, after learning that the data to be transmitted by UE1 is a D2D-only traffic according to the NAS information transparently transmitted by the base station, the MME may generate a new IE (such as a D2D-only indicator IE), and encapsulate it in an S1AP message (such as an E-RAB SETUP REQUEST);
step 1013: transmitting a feedback message by the mobility management to the base station, so that the base station learns according to the indication information that the data traffic of the UE is a D2D-only traffic.

In this way, the network side may perform corresponding configuration after receiving the uplink information transfer message, and the base station starts to schedule UE1 to perform data communication.

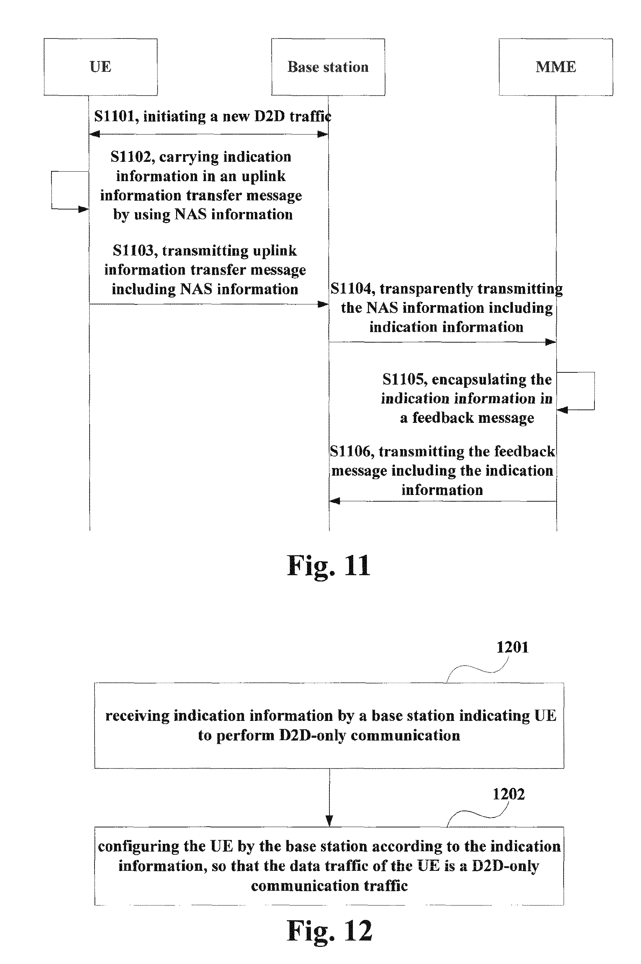

In another implementation, the UE has set up the RRC connection. Fig. 11 is another flowchart of the information reporting method of the embodiment of the present disclosure, which is described from RRC connection having been set up and starting to initiating traffic transmission by the UE. As shown in Fig. 11, the method includes:
step 1101: initiating a new D2D traffic by the UE;
in this implementation, UE1 in communication has set up RRC connection and reinitiates a new D2D-only traffic, and the base station performs RRC connection reconfiguration on it, that is, transmitting an *RRCConnectionReconfiguration* message;
step 1102: adding NAS information into an uplink information transfer message by the UE after the RRC connection reconfiguration, so as to carry indication information indicating D2D-only communication;
in this implementation, UE1 may add a new IE into the uplink information transfer message or enhance an original IE (for example, a DedicatedInfoNAS IE may be enhanced) after completing the RRC connection reconfiguration; and UE1 informs the network side via the NAS information added into the DedicatedInfoNAS IE that the data needing to be transmitted is a D2D-only traffic;
step 1103: transmitting the indication information by the UE via the uplink information transfer message;
in this implementation, UE1 may transmit the enhanced uplink information transfer message to the base station;
step 1104: transparently transmitting the NAS information to a mobility management entity by the base station after receiving the uplink information transfer message;
step 1105: encapsulating the indication information in a feedback message by the mobility management entity after receiving the NAS information carrying the indication information transparently transmitted by the base station;
in this implementation, after learning that the data to be transmitted by UE1 is a D2D-only traffic according to the NAS information transparently transmitted by the base station, the MME may generate a new IE (such as a D2D-only indicator IE), and encapsulate it in an S1AP message (such as an E-RAB SETUP REQUEST);
step 1106: transmitting the feedback message by the mobility management to the base station, so that the base station learns according to the indication information that the data traffic of the UE is a D2D-only traffic.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 6

An embodiment of the present disclosure provides an information reporting method for D2D communication, which is described from a base station side. This embodiment corresponds to the UE side of embodiments 1-5, with the identical contents being not going to be described herein any further.

Fig. 12 is a flowchart of the information reporting method of the embodiment of the present disclosure. As shown in Fig. 12, the method includes:
step 1201: receiving indication information by a base station indicating UE to perform D2D-only communication; and
step 1202: configuring the UE by the base station according to the indication information, so that the data traffic of the UE is a D2D-only communication traffic.

In this embodiment, the base station may make according to the indication information that one or more D2D data traffics of the UE to be kept as D2D-only communication traffics; however, the present disclosure is not limited thereto, and a particular implementation may be determined according to an actual situation.

In an implementation, the indication information is carried in an RRC connection request message, the RRC connection request message being transmitted by the UE when the UE requests the base station for setting up RRC connection.

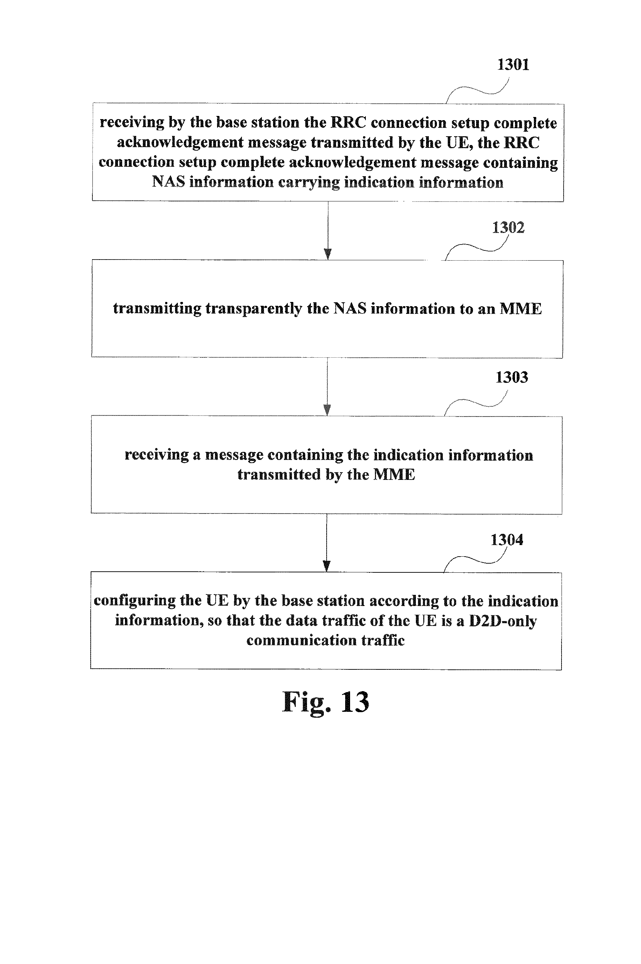

In another implementation, the indication information is carried in an RRC connection request setup completion acknowledgement message. Fig. 13 is another flowchart of the information reporting method of the embodiment of the present disclosure. As shown in Fig. 13, the method includes:
step 1301: receiving by the base station the RRC connection setup complete acknowledgement message transmitted by the UE, the RRC connection setup complete acknowledgement message containing NAS information carrying indication information, the indication information being used for indicating that the UE performs D2D-only communication;
step 1302: transmitting transparently by the base station the NAS information to an MME; and
step 1303: receiving by the base station a message containing the indication information transmitted by the MME;
step 1304: configuring the UE by the base station according to the indication information, so that the data traffic of the UE is a D2D-only communication traffic.

In another implementation, the indication information is carried in an RRC connection reconfiguration complete message, the RRC connection reconfiguration complete message being transmitted by the UE to the base station after completing RRC connection reconfiguration.

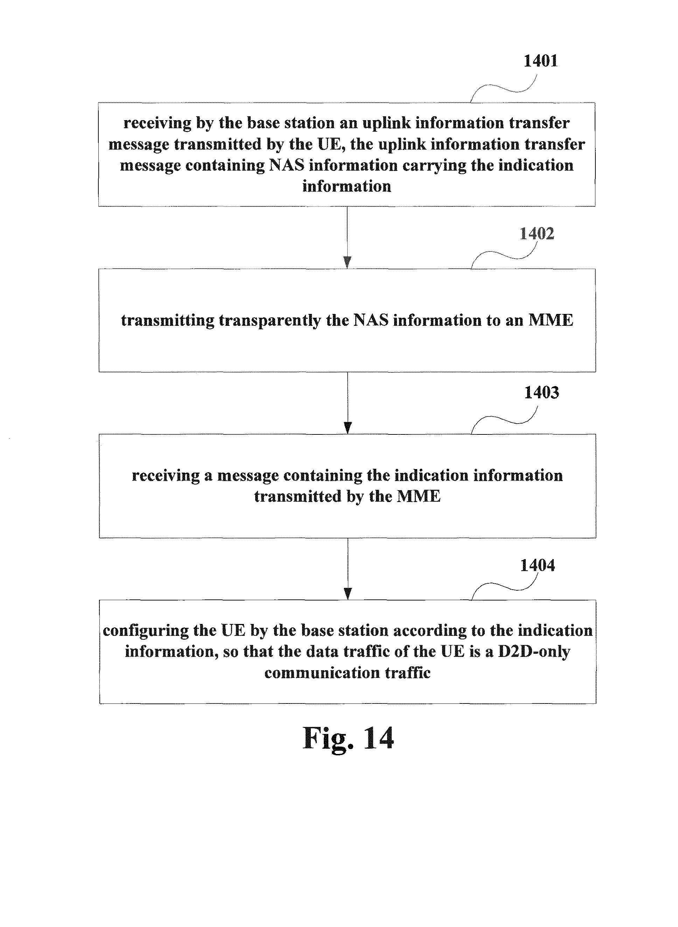

In another implementation, the indication information is carried in an uplink information transfer message. Fig. 14 is another flowchart of the information reporting method of the embodiment of the present disclosure. As shown in Fig. 14, the method includes:
step 1401: receiving by the base station an uplink information transfer message transmitted by the UE, the uplink information transfer message containing NAS information carrying the indication information indicating that the UE performs D2D-only communication;
step 1402: transmitting transparently by the base station the NAS information to an MME;
step 1403: receiving by the base station a message containing the indication information transmitted by the MME; and
step 1404: configuring the UE by the base station according to the indication information, so that the data traffic of the UE is a D2D-only communication traffic.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 7

An embodiment of the present disclosure provides an information reporting method for D2D communication, which is described from a mobility management entity side. This embodiment corresponds to the UE side of embodiments 1-5 and the base station side of Embodiment 6, with the identical contents being not going to be described herein any further.

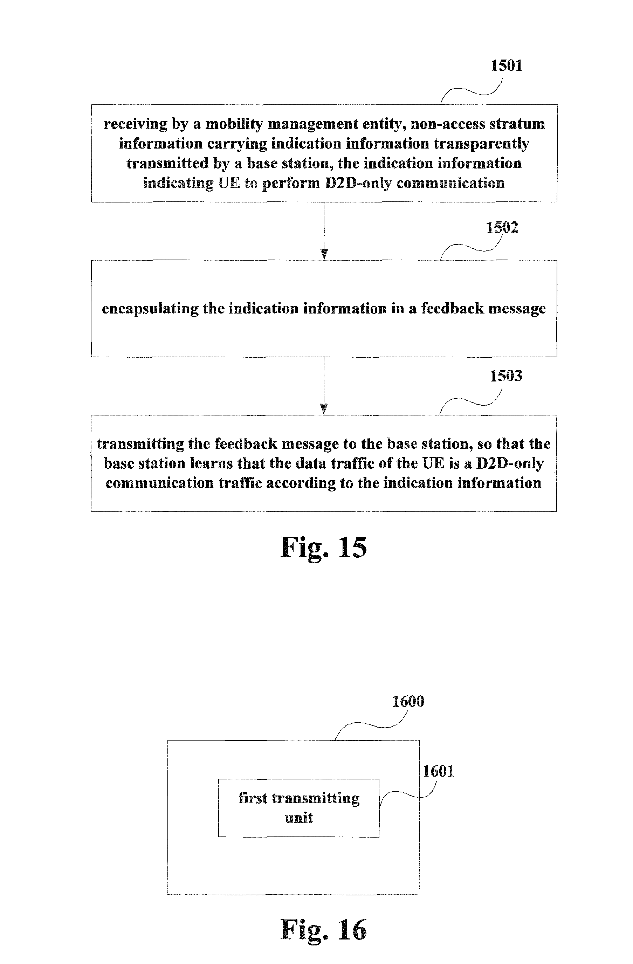

Fig. 15 is a flowchart of the information reporting method of the embodiment of the present disclosure. As shown in Fig. 15, the method includes:
step 1501: receiving by a mobility management entity, non-access stratum information carrying indication information transparently transmitted by a base station, the indication information indicating UE to perform D2D-only communication;
step 1502: encapsulating by the mobility management entity the indication information in a feedback message; and
step 1503: transmitting by the mobility management entity the feedback message to the base station, so that the base station learns that the data traffic of the UE is a D2D-only communication traffic according to the indication information.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 8

An embodiment of the present disclosure provides UE, corresponding to the method of embodiments 1-5, with the identical contents being not going to be described herein any further.

Fig. 16 is a schematic diagram of the structure of the UE of the embodiment of the present disclosure. As shown in Fig. 16, the UE 1600 includes: a first transmitting unit 1601. The relevant art may be referred to for other parts of the UE 1600.

Wherein, the first transmitting unit 1601 is configured to transmit indication information indicating to perform D2D-only communication, so that a base station learns that the data traffic of the UE is a D2D-only communication traffic.

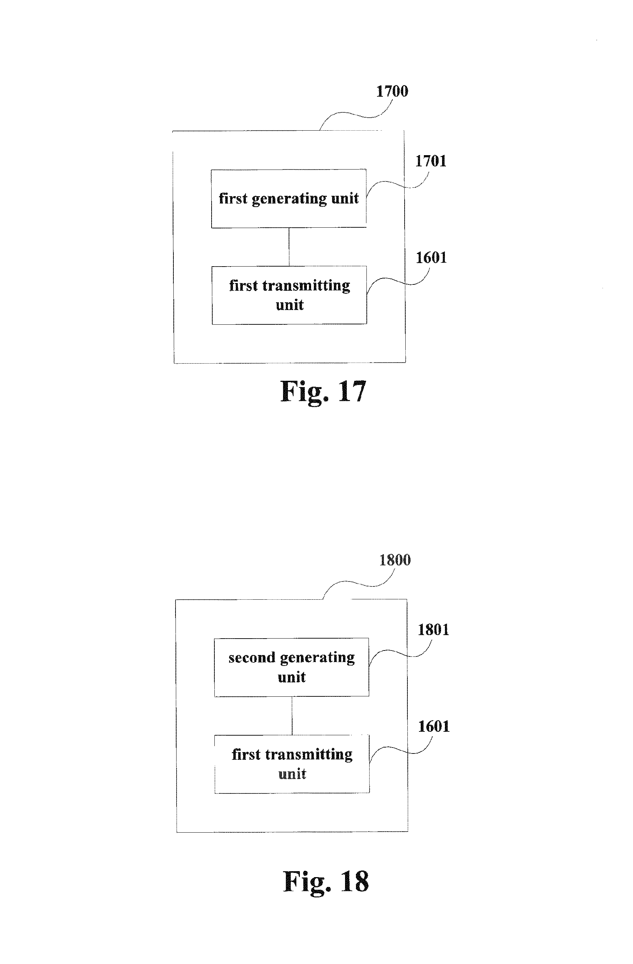

Fig. 17 is another schematic diagram of the structure of the UE of the embodiment of the present disclosure. As shown in Fig. 17, the UE 1700 includes: a first generating unit 1701 and a first transmitting unit 1601.

Wherein the first generating unit 1701 is configured to add the indication information into an RRC connection request message when the UE requests the base station for setting up RRC connection, and the first transmitting unit 1601 is configured to transmit the indication information via the RRC connection request message.

Fig. 18 is a further schematic diagram of the structure of the UE of the embodiment of the present disclosure. As shown in Fig. 18, the UE 1800 includes: a second generating unit 1801 and a first transmitting unit 1601.

Wherein the second generating unit 1801 is configured to add NAS information in an RRC connection setup complete acknowledgement message after the UE receives an RRC connection setup complete message transmitted by the base station, so as to carry the indication information;
and the first transmitting unit 1601 is configured to transmit the indication information via the acknowledgement message, so that the base station transparently transmits the NAS information to a mobility management entity after receiving the acknowledgement message, and the mobility management entity transmits the indication information to the base station.

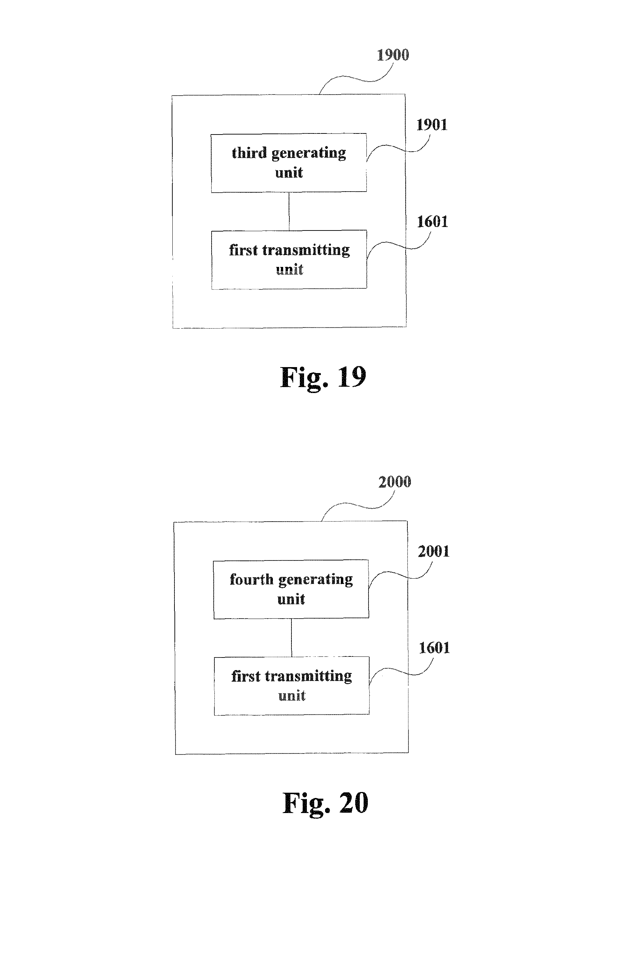

Fig. 19 is still another schematic diagram of the structure of the UE of the embodiment of the present disclosure. As shown in Fig. 19, the UE 1900 includes: a third generating unit 1901 and a first transmitting unit 1601.

Wherein the third generating unit 1901 is configured to add the indication information into an RRC connection reconfiguration complete message after the UE completes RRC connection reconfiguration; and the first transmitting unit 1601 is configured to transmit the indication information via the RRC connection reconfiguration complete message.

Fig. 20 is still another schematic diagram of the structure of the UE of the embodiment of the present disclosure. As shown in Fig. 20, the UE 2000 includes: a fourth generating unit 2001 and a first transmitting unit 1601.

Wherein the fourth generating unit 2001 is configured to add NAS information in an uplink information transfer message after the UE completes RRC connection reconfiguration, so as to carry the indication information;
and the first transmitting unit 1601 is configured to transmit the indication information via the uplink information transfer message, so that the base station transparently transmits the NAS information to a mobility management entity after receiving the uplink information transfer message, and the mobility management entity transmits the indication information to the base station.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 9

An embodiment of the present disclosure provides a base station, corresponding to the method of Embodiment 6, with the identical contents being not going to be described herein any further.

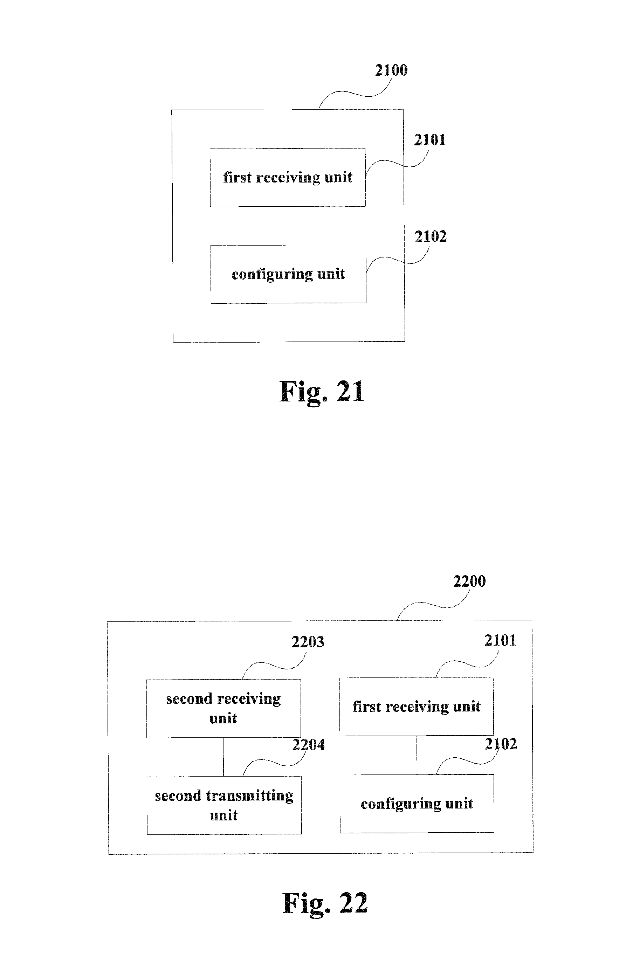

Fig. 21 is a schematic diagram of the structure of the base station of the embodiment of the present disclosure. As shown in Fig. 21, the base station 2100 includes: a first receiving unit 2101 and a configuring unit 2102. The relevant art may be referred to for other parts of the base station 2100.

Wherein, the first receiving unit 2101 is configured to receive indication information indicating UE to perform D2D-only communication, and the configuring unit 2102 is configured to configure the UE, so that the data traffic of the UE is a D2D-only communication traffic.

In an implementation, the indication information is carried in an RRC connection request message, the RRC connection request message being transmitted by the UE when the UE requests the base station for setting up RRC connection.

In another implementation, the indication information is carried in an RRC connection complete acknowledgement message. Fig. 22 is another schematic diagram of the structure of the base station of the embodiment of the present disclosure. As shown in Fig. 22, the base station 2200 includes: a first receiving unit 2101 and a configuring unit 2102.

As shown in Fig. 22, the base station 2200 may further include: a second receiving unit 2203 and a second transmitting unit 2204.

Wherein the second receiving unit 2203 is configured to receive an RRC connection setup complete acknowledgement message transmitted by the UE, the RRC connection setup complete acknowledgement message containing NAS information carrying the indication information, and the second transmitting unit 2204 is configured to transmit transparently the NAS information to a mobility management entity, and the first receiving unit 2101 is configured to receive a message containing the indication information transmitted by the mobility management entity.

In another implementation, the indication information is carried in an RRC connection reconfiguration complete message, the RRC connection reconfiguration complete message being transmitted to the base station by the UE after completing RRC connection reconfiguration.

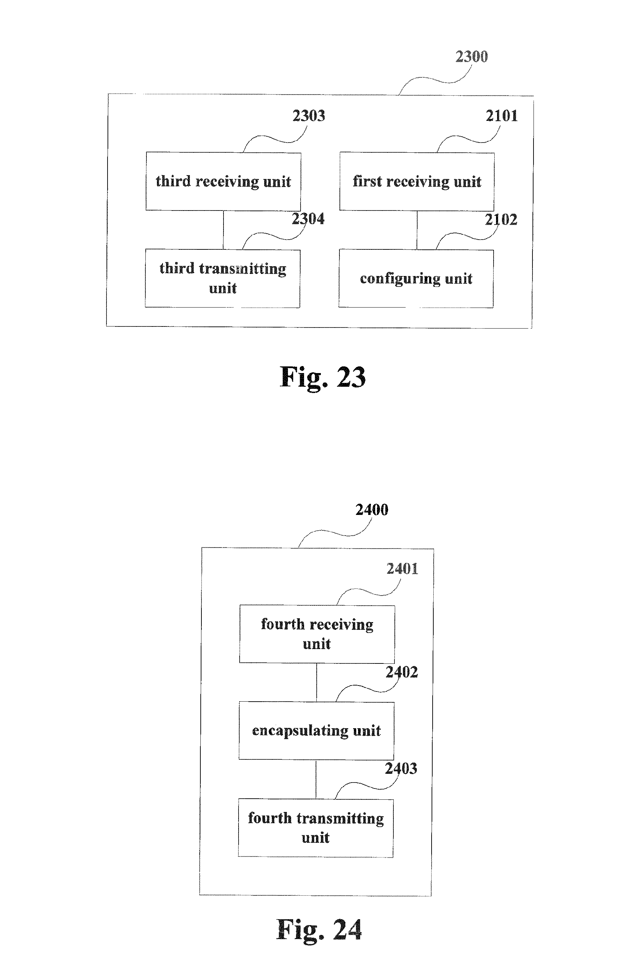

In another implementation, the indication information is carried in uplink information transfer message. Fig. 23 is another schematic diagram of the structure of the base station of the embodiment of the present disclosure. As shown in Fig. 23, the base station 2300 includes: a first receiving unit 2101 and a configuring unit 2102.

As shown in Fig. 23, the base station 2300 may further include: a third receiving unit 2303 and a third transmitting unit 2304.

Wherein, the third receiving unit 2303 is configured to receive an uplink information transfer message transmitted by the UE, the uplink information transfer message containing NAS information carrying the indication information, and the third transmitting unit 2304 is configured to transmit transparently the NAS information to a mobility management entity; and the first receiving unit 2101 is configured to receive a message containing the indication information transmitted by the mobility management entity.

It can be seen from the above embodiment that by reporting indication information indicating D2D-only by the UE, the base station may learn the D2D-only information of the UE, and the network side may suitably configure the UE, thereby avoiding unnecessary handover or mode selection.

### Embodiment 10

An embodiment of the present disclosure provides a mobility management entity, corresponding to the method of Embodiment 7, with the identical contents being not going to be described herein any further.

Fig. 24 is a schematic diagram of the structure of the mobility management entity of the embodiment of the present disclosure. As shown in Fig. 24, the mobility management entity 2400 includes: a fourth receiving unit 2401, an encapsulating unit 2402 and a fourth transmitting unit 2403. The relevant art may be referred to for other parts of the mobility management entity 2400.

Wherein, the fourth receiving unit 2401 is configured to receive NAS information carrying indication information transparently transmitted by a base station, the indication information indicating UE to perform D2D-only communication, the encapsulating unit 2402 is configured to encapsulate the indication information in a feedback message, and the fourth transmitting unit 2403 is configured to transmit the feedback message to the base station, so that the base station learns that a data traffic of the UE is a D2D-only communication traffic according to the indication information.

An embodiment of the present disclosure provides a communication system, including the UE as described in Embodiment 8 and the base station as described in Embodiment 9; or including the UE as described in Embodiment 8, the base station as described in Embodiment 9 and the mobility management entity as described in Embodiment 10.

An embodiment of the present disclosure provides a computer-readable program, wherein when the program is executed in UE, the program enables a computer to carry out the information reporting method for D2D communication as described in embodiments 1-5 in the UE.

An embodiment of the present disclosure provides a storage medium in which a computer-readable program is stored, wherein the computer-readable program enables a computer to carry out the information reporting method for D2D communication as described in embodiments 1-5 in UE.

An embodiment of the present disclosure provides a computer-readable program, wherein when the program is executed in a base station, the program enables a computer to carry out the information reporting method for D2D communication as described in Embodiment 6 in the base station.

An embodiment of the present disclosure provides a storage medium in which a computer-readable program is stored, wherein the computer-readable program enables a computer to carry out the information reporting method for D2D communication as described in Embodiment 6 in a base station.

An embodiment of the present disclosure provides a computer-readable program, wherein when the program is executed in a mobility management entity, the program enables a computer to carry out the information reporting method for D2D communication as described in Embodiment 7 in the mobility management entity.

An embodiment of the present disclosure provides a storage medium in which a computer-readable program is stored, wherein the computer-readable program enables a computer to carry out the information reporting method for D2D communication as described in Embodiment 7 in a mobility management entity.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration(s).

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

## Claims

1. An information reporting method for D2D (device to device) communication, comprising:
transmitting, by UE, indication information indicating to perform D2D-only communication, so that a base station learns that a data traffic of the UE is a D2D-only communication traffic.

2. The method according to claim 1, wherein the method further comprises:
adding, by the UE, the indication information into a radio resource control connection request message, when the UE requests the base station for setting up radio resource control connection;
and the UE transmits the indication information via the radio resource control connection request message.

3. The method according to claim 1, wherein the method further comprises:
carrying, by the UE, the indication information in a radio resource control connection setup complete acknowledgement message by using non-access stratum information, after receiving a radio resource control connection setup message transmitted by the base station;
and the UE transmits the indication information via the acknowledgement message, so that the base station transparently transmits the non-access stratum information to a mobility management entity after receiving the acknowledgement message, and the mobility management entity transmits the indication information to the base station.

4. The method according to claim 1, wherein the method further comprises:
adding, by the UE, the indication information into a radio resource control connection reconfiguration complete message, after completing radio resource control connection reconfiguration;
and the UE transmits the indication information via the radio resource control connection reconfiguration complete message.

5. The method according to claim 1, wherein the method further comprises:
carrying, by the UE, the indication information in an uplink information transfer message by using non-access stratum information after completing radio resource control connection reconfiguration;
and the UE transmits the indication information via the uplink information transfer message, so that the base station transparently transmits the non-access stratum information element to a mobility management entity after receiving the uplink information transfer message, and the mobility management entity transmits the indication information to the base station.

6. An information reporting method for D2D communication, comprising:
receiving, by a base station, indication information indicating UE to perform D2D-only communication; and
configuring the UE by the base station according to the indication information, so that a data traffic of the UE is a D2D-only communication traffic.

7. The method according to claim 6, wherein the indication information is carried in a radio resource control connection request message, the radio resource control connection request message being transmitted by the UE when the UE requests the base station for setting up radio resource control connection.

8. The method according to claim 6, wherein the method further comprises:
receiving, by the base station, a radio resource control connection setup complete acknowledgement message transmitted by the UE; wherein the radio resource control connection setup complete acknowledgement message contains non-access stratum information carrying the indication information; and
transmitting transparently the non-access stratum information to a mobility management entity;
and the base station receives a message containing the indication information transmitted by the mobility management entity.

9. The method according to claim 6, wherein the indication information is carried in a radio resource control connection reconfiguration complete message, the radio resource control connection reconfiguration complete message being transmitted by the UE to the base station after completing radio resource control connection reconfiguration.

10. The method according to claim 6, wherein the method further comprises:
receiving, by the base station, an uplink information transfer message transmitted by the UE; wherein the uplink information transfer message contains non-access stratum information carrying the indication information; and
transmitting transparently the non-access stratum information to a mobility management entity;
and the base station receives a message containing the indication information transmitted by the mobility management entity.

11. An information reporting method for D2D communication, comprising:
receiving, by a mobility management entity, non-access stratum information carrying indication information transparently transmitted by a base station, the indication information indicating UE to perform D2D-only communication;
encapsulating the indication information in a feedback message; and
transmitting the feedback message to the base station, so that the base station learns that a data traffic of the UE is a D2D-only communication traffic according to the indication information.

12. UE, comprising:
a first transmitting unit, configured to transmit indication information indicating to perform D2D-only communication, so that a base station learns that a data traffic of the UE is a D2D-only communication traffic.

13. The UE according to claim 12, wherein the UE further comprises:
a first generating unit, configured to add the indication information into a radio resource control connection request message when the UE requests the base station for setting up radio resource control connection;
and the first transmitting unit is configured to transmit the indication information via the radio resource control connection request message.

14. The UE according to claim 12, wherein the UE further comprises:
a second generating unit, configured to carry the indication information in a radio resource control connection setup complete acknowledgement message by using non-access stratum information, after the UE receives a radio resource control connection setup complete message transmitted by the base station;
and the first transmitting unit is configured to transmit the indication information via the acknowledgement message, so that the base station transparently transmits the non-access stratum information to a mobility management entity after receiving the acknowledgement message, and the mobility management entity transmits the indication information to the base station.

15. The UE according to claim 12, wherein the UE further comprises:
a third generating unit, configured to add the indication information into a radio resource control connection reconfiguration complete message after the UE completes radio resource control connection reconfiguration;
and the first transmitting unit is configured to transmit the indication information via the radio resource control connection reconfiguration complete message.

16. The UE according to claim 12, wherein the UE further comprises:
a fourth generating unit, configured to carry the indication information in an uplink information transfer message by using non-access stratum information after the UE completes radio resource control connection reconfiguration;
and the first transmitting unit is configured to transmit the indication information via the uplink information transfer message, so that the base station transparently transmits the non-access stratum information to a mobility management entity after receiving the uplink information transfer message, and the mobility management entity transmits the indication information to the base station.

17. Abase station, comprising:
a first receiving unit, configured to receive indication information indicating UE to perform D2D-only communication; and
a configuring unit, configured to configure the UE, so that a data traffic of the UE is a D2D-only communication traffic.

18. The base station according to claim 17, wherein the indication information is carried in a radio resource control connection request message, the radio resource control connection request message being transmitted by the UE when the UE requests the base station for setting up radio resource control connection.

19. The base station according to claim 17, wherein the base station further comprises:
a second receiving unit, configured to receive a radio resource control connection setup complete acknowledgement message transmitted by the UE; wherein the radio resource control connection setup complete acknowledgement message contains non-access stratum information carrying the indication information; and
a second transmitting unit, configured to transmit transparently the non-access stratum information to a mobility management entity;
and the first receiving unit is configured to receive a message containing the indication information transmitted by the mobility management entity.

20. The base station according to claim 17, wherein the indication information is carried in a radio resource control connection reconfiguration complete message, the radio resource control connection reconfiguration complete message being transmitted by the UE to the base station after completing radio resource control connection reconfiguration.

21. The base station according to claim 17, wherein the base station further comprises:
a third receiving unit, configured to receive an uplink information transfer message transmitted by the UE; wherein the uplink information transfer message contains non-access stratum information carrying the indication information; and
a third transmitting unit, configured to transmit transparently the non-access stratum information to a mobility management entity;
and the first receiving unit is configured to receive a message containing the indication information transmitted by the mobility management entity.

22. A mobility management entity, comprising:
a fourth receiving unit, configured to receive non-access stratum information carrying indication information transparently transmitted by a base station, the indication information indicating UE to perform D2D-only communication;
an encapsulating unit, configured to encapsulate the indication information in a feedback message; and
a fourth transmitting unit, configured to transmit the feedback message to the base station, so that the base station learns that a data traffic of the UE is a D2D-only communication traffic according to the indication information.

23. A communication system, comprising the UE as claimed in any one of claims 12-16 and the base station as claimed in any one of claims 17-21; or
comprising the UE as claimed in any one of claims 12-16, the base station as claimed in any one of claims 17-21 and the mobility management entity as claimed in claim 22.

24. A computer-readable program, wherein when the program is executed in UE, the program enables a computer to carry out the information reporting method for D2D communication as claimed in any one of claims 1-5 in the UE.

25. A storage medium in which a computer-readable program is stored, wherein the computer-readable program enables a computer to carry out the information reporting method for D2D communication as claimed in any one of claims 1-5 in UE.

26. A computer-readable program, wherein when the program is executed in a base station, the program enables a computer to carry out the information reporting method for D2D communication as claimed in any one of claims 6-11 in the base station.

27. A storage medium in which a computer-readable program is stored, wherein the computer-readable program enables a computer to carry out the information reporting method for D2D communication as claimed in any one of claims 6-11 in a base station.
